Europäisches Patentamt

European Patent Office

Office européen des brevets

(11) Publication number: **0 086 002**
**A1**

## (12) EUROPEAN PATENT APPLICATION

(21) Application number: **83200102.8**

(22) Date of filing: **24.01.83**

(51) Int. Cl.³: **F 16 J 15/40**
**F 16 J 15/32**

(30) Priority: **09.02.82 BE 207271**

(43) Date of publication of application:
**17.08.83 Bulletin 83/33**

(84) Designated Contracting States:
**DE FR GB NL**

(71) Applicant: **"Dredging International"**
**Scheldedijk, 30**
**B-2730 Zwijndrecht(BE)**

(72) Inventor: **Snijders, Eric Adriaan**
**Onderstal 32**
**NL-4631 NR Hoogerheide(NL)**

(74) Representative: **Pieraerts, Jacques et al,**
**Bureau Gevers S.A. rue de Livourne 7, Bte. 1**
**B-1050 Bruxelles(BE)**

(54) **Sealing of a pump impeller shaft.**

(57) There is described an impeller shaft seal for a centrifugal pump the impeller shaft wear bush of which is surrounded on the outer side thereof by sealing rings the resilient lips of which engage said impeller shaft wear bush, in which said sealing rings (8-8') are mounted symmetrically to one another inside a common bearing ring (7) which is loosely supported inside a cylinder-shaped space (12) about said impeller shaft wear bush (2), in such a way that said bearing ring (7) can receive the radial vibration amplitude of the pump impeller shaft (1).

Fig. 1

"Sealing of a pump impeller shaft".

This invention pertains to an impeller shaft seal for a centrifugal pump the wear bush of which is surrounded on the outer side thereof by sealing rings the resilient lips of which engage said impeller shaft wear bush.

When sealing the impeller shaft of a sand pump, use is usually made of a plurality of adjacent sealing rings the resilient lips of which are facing the impeller. Each sealing ring is supported inside a bearing ring. In the sealing rings are provided lubricating channels which open underneath the pertaining lip, in such a way that the grease penetrates underneath said lip and forms a lubricating film which forms a protecting collar on the lip outer side which lies nearest the impeller.

Lubricating of the sealing rings increases the life duration of the rings, but should also prevent abrasive materials which are carried by the water inside the pump, from corroding the impeller shaft bush and the sealing rings.

The life duration for such a sealing is very short with higher pump pressures and it is further unfavourably influenced by vibrating of the pump shaft when large stones are pumped together with the water.

The invention has for object to provide a seal which is unaffected by marked variations in the water pressure and in the vibrating amplitude of the pump shaft.

For this purpose, said sealing rings are mounted symmetrically to one another inside a common bearing ring which is loosely supported inside a cylinder-shaped space about said impeller shaft wear bush, in such a way that said bearing ring can receive the radial vibration amplitude of the pump impeller shaft.

According to the invention, said bearing ring is provided with at least one lubricating channel which insures a lubricating agent feed to the ring-shaped space between said wear bush and said bearing ring, between said sealing rings.

According to a very advantageous embodiment of the invention, a ring-shaped space is provided which surrounds that part of said wear bush which connects to the bearing ring on that side which lies farthest away from the pump impeller, and means are provided to retain inside said space, an oil pressure which is at least equal to that pressure which is exerted on the lubricating grease fed through said lubricating channel.

A feature of the invention lies in that means are provided to adapt said oil pressure to the water pressure which prevails on the pump impeller side during the pump operation.

Other details and features of the invention will stand out from the following description, given by way of non limitative example and with reference to the accompanying drawings, in which:

Figure 1 is a half cross-section through an impeller shaft seal and some cooperating elements from the pump body proper.

Figure 2 shows the hydraulic diagram of the impeller shaft sealing according to the invention.

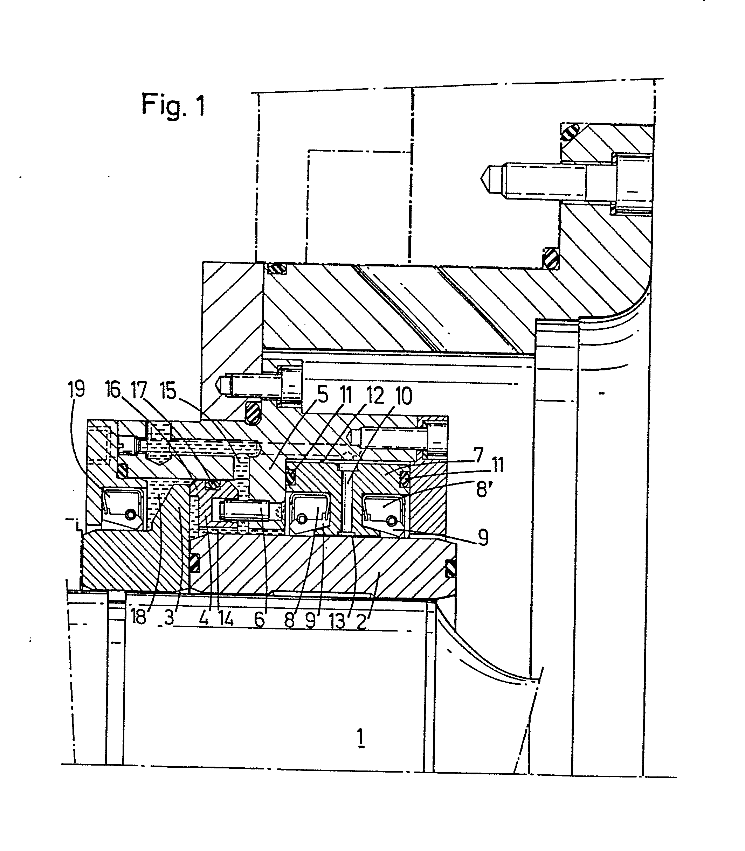

The impeller shaft sealing according to the invention is built-up about the impeller shaft 1 with wear bush 2. Said wear bush 2 rotates together with the pump shaft as well as the flange 3 which is present on that side of wear bush 2 which is removed from the impeller. About said wear bush 2, opposite flange 3, is mounted a thrust ring 4 which is prevented by pins 6 from rotating relative to the fixed collar 5, while springs not shown in figure 1, retain said thrust ring 4 pressed against the rotating flange 3.

About said wear bush 2 is loosely supported inside said collar 5, a bearing ring 7 which is provided with two sealing rings 8 and 8'. Said sealing rings are provided with a resilient lip 9 which is resiliently pressed against said wear bush 2. The sealing rings 8 and 8' are for example of that type which is known in the trade as "simmering".

As it appears from figure 1, said bearing ring 7 further provided sidewise with O-rings 11, is supported with some play inside the ring-shaped space 12. Such a structure is particularly designed to avoid with vibrating of the pump shaft, such vibrating influencing unfavourably the complete unit. The bearing ring 7 itself is thereby protected against premature wear. Underneath the grease-feeding channel 10, a small ring-shaped recess 13 is provided in the bearing ring 7, through which the pressurized grease can flow out towards both sealing rings 8 and 8'.

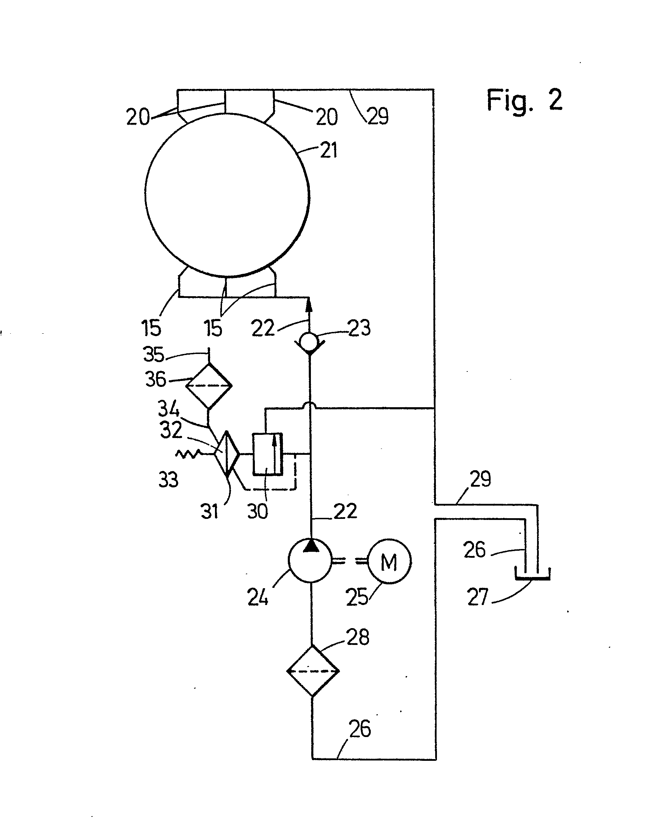

To now prevent that said lubricating grease as the water pressure increases, should flow back along the pump impeller side towards sealing ring 8, whereby suitable lubricating of lip 9 from sealing ring 8' would no more be insured, there is provided according to the invention, for the retaining of an oil pressure along that side of bearing ring 7 which lies farthest away from the pump impeller. For this purpose, about said wear bush 2, both level with thrust ring 4 and level with collar 5 , there is provided a ring-shaped space 14 which forms an oil chamber which communicates through an oil channel 15, with an oil pump the location and function of which will be made clear with reference to the hydraulic diagram as shown in figure 2.

From the description so far of the impeller shaft sealing according to the invention, it is already clear that inside that space which extends up to against bearing ring 7, it is possible to retain an oil pressure the variations of which will be explained with reference to the hydraulic diagram as shown in figure 2.

The oil pressure break-down occurs between the rotating flange 3 and that lip 16 engaging same, of the thrust ring 4. Indeed said thrust ring 4 is provided on the outer circumference thereof with an O-ring 17 which prevents flowing-back of pressurized oil between collar 6 and said thrust ring 4. Inside space 18 which is closed on the outer side by a sealing ring 19, no pressure or but a negligible pressure is noticed. Said space 18 communicates with a series of return-flow channels 20 which are shown diagrammatically in figure 2.

With reference now to figure 2, the diagrammatically-shown impeller shaft sealing is shown in 21. The oil-feed pipes 15 form a branch from an oil line 22 with non-return valve 23. The required pressure inside line 22 is retained by means of an oil pump 24 driven by a motor 25. Upstream from said pump 24, said oil line bears reference numeral 26. In this line 26 connected to an oil tank 27, is mounted an oil filter 28. The flowing-back to said oil tank 27 of the unpressurized oil occurs as stated above, through the return-flow channels 20 which branch-off from return oil line 29.

An element of great importance to the invention is the automatic oil-pressure regulation according to the water pressure which prevails during the pump operation along the pump impeller and varies during such pump operation.

To insure such oil-pressure regulation very efficiently and with technically-simple means, a pressure-regulating valve 30 is cut-in between lines 22 and 29. On said pressure-regulating valve 30 acts a diaphragm 31 which is part of a diaphragm housing 32. An adjustable spring 33 can act on said diaphragm 31. On the one diaphragm side is present oil, while on the other side, that is the side of line 34, is present water. Such water which originates from the so-called gland line 35, is naturally subjected to pressure variations according to the working of the impeller pump proper. To complete the unit, a water filter has been shown in 36 in figure 2.

When considering the hydraulic diagram as shown in figure 2, it is directly clear that the water pressure variations which appear on the pump impeller side, are directly coupled to the oil pressure inside line 22 and those oil lines 15 which open in various locations, preferably in three locations in that space 14 about wear bush 2.

Such varying oil pressure, due to the spring action from the regulating valve (differential-pressure regulating valve), is always a fraction higher than the water pressure inside the sand pump. As such oil pressure also acts on the lip from sealing ring 8, the lubricating grease can only escape underneath the lip from ring 8' to the sand pump housing. The grease pressure is thus equal to the water pressure inside the sand pump. The pressure differential on either side of rings 8 and 8' is thus automatically retained constant at that value as defined by the regulating valve.

There is thus obtained a shaft sealing with automatic pressure compensating which can moreover receive large vibration amplitudes from the pump shaft.

A result therefrom is a markedly better lubricating of said sealing rings and a lengthened life duration for said components of importance.

It must be understood that the invention is in no way limited to the above embodiments and that many changes may be brought therein without departing from the scope of the invention as defined by the appended claims.

## CLAIMS.

1. Impeller shaft seal for a centrifugal pump the impeller shaft wear bush of which is surrounded on the outer side thereof by sealing rings the resilient lips of which engage said impeller shaft wear bush, in which said sealing rings (8-8') are mounted symmetrically to one another inside a common bearing ring (7) which is loosely supported inside a cylinder-shaped space (12) about said impeller shaft wear bush (2), in such a way that said bearing ring (7) can receive the radial vibration amplitude of the pump impeller shaft (1).

2. Impeller shaft seal as defined in claim 1, in which said bearing ring (7) is provided with at least one lubricating grease channel (10) which insures a lubricating grease feed to that ring-shaped space between said wear bush (2) and said bearing ring (7), between said sealing rings (8-8').

3. Impeller shaft seal as defined in either one of claims 1 and 2, in which a ring-shaped space (14) is provided which surrounds that part of said wear bush (2) which connects to said bearing ring (7) on that side which lies farthest away from the pump impeller, and means are provided to retain inside said space, an oil pressure which is at least equal to that pressure which is exerted on the lubricating grease fed through said lubricating channel (10).

4. Impeller shaft seal as defined in any one of claims 1-3, in which said bearing ring (7) is provided sidewise with O-rings (11) inside said cylinder-shaped space (12).

5. Impeller shaft seal as defined in any one of claims 1-4, in which said ring-shaped space (14) extends up to against the one side of said common bearing ring (7) to couple the oil pressure retained inside said ring-shaped space (14) to the resilient lip (9) from the adjacent sealing ring (8) and thus retain said lip continuously contacting said wear bush (2).

6. Impeller shaft seal as defined in any one of claims 2-5, in which said ring-shaped space (14) connects to that portion of said bearing ring (7) which lies farthest away from the pump impeller, and is closed by a flange (3) which rotates together with the wear bush (2) and against which is pressed resiliently a thrust ring (4), which thrust ring is provided on the outer side thereof with an O-ring (17) for preventing oil-pressure loss, while the oil pressure break-down occurs between said flange (3) and the lip (16) from said thrust ring (4), and there is provided therefor a ring-like space (18) from which the pressure-free oil flows back to an oil tank (27).

7. Impeller shaft seal as defined in any one of claims 1-6, in which means are provided to adapt the oil pressure inside the lines (15) and thus also inside said ring-shaped space (14) to that water pressure which prevails during the operation of the impeller pump and which can vary.

8. Impeller shaft seal as defined in claim 7, in which said means are mainly comprised of a pressure-regulating valve (30) which is influenced by oil-pressure changes which are caused by the action on the oil of a diaphragm (31) which is mounted inside a diaphragm housing (32), inside which diaphragm housing oil is present on the one diaphragm side and water is present on the other diaphragm side, in such a way that those pressure changes exerted on the water due to the pump operation, influence the oil pressure inside said oil lines (15) and ring-shaped space (14).

Fig. 1

0086002

Fig. 2

**EUROPEAN SEARCH REPORT**

**0086002**
Application number

EP 83 20 0102

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | CH-A- 448 647 (CENTRANS) *Column 4, lines 13-65; figure 3* | 1,2,4 | F 16 J 15/40 F 16 J 15/32 |
| X | US-A-3 088 744 (EZEKIEL) *Column 2, line 55 - column 5, line 2; figures 1-3* | 1,2,7, 8 | |
| X | US-A-3 726 531 (PAGAN) *Column 1, line 57 - column 3, line 64; figures 1,2* | 1,2,4 | |

TECHNICAL FIELDS SEARCHED (Int. Cl. ³)

F 16 J

The present search report has been drawn up for all claims

| Place of search THE HAGUE | Date of completion of the search 03-05-1983 | Examiner LEGER M.G.M. |
|---|---|---|

EPO Form 1503. 03.82